**Europäisches Patentamt**

**European Patent Office**

**Office européen des brevets**

(19)

(11) Veröffentlichungsnummer : **0 496 969 B1**

(12) # EUROPÄISCHE PATENTSCHRIFT

(45) Veröffentlichungstag der Patentschrift :
18.01.95 Patentblatt 95/03

(51) Int. Cl.⁶ : **G01M 13/02**

(21) Anmeldenummer : **91119911.5**

(22) Anmeldetag : **22.11.91**

---

(54) **Messvorrichtung zur Messung von Kräften und Momenten in einer Gelenkanordnung.**

---

(30) Priorität : **26.01.91 DE 4102278**

(43) Veröffentlichungstag der Anmeldung :
**05.08.92 Patentblatt 92/32**

(45) Bekanntmachung des Hinweises auf die
Patenterteilung :
**18.01.95 Patentblatt 95/03**

(84) Benannte Vertragsstaaten :
**FR GB IT**

(56) Entgegenhaltungen :
**US-A- 1 379 961**
**US-A- 4 015 468**

(73) Patentinhaber : **RENK**
**AKTIENGESELLSCHAFT**
**Gögginger Strasse 73**
**D-86159 Augsburg (DE)**

(72) Erfinder : **Kugler, Artur**
**Droste-Hülshoff-Strasse 26**
**W-8900 Augsburg (DE)**
Erfinder : **Schilcher, Johann**
**Simpertstrasse 10**
**W-8901 Königsbrunn (DE)**
Erfinder : **Wiehler, Hubert**
**Leharstrasse 2i**
**W-8900 Augsburg (DE)**

EP 0 496 969 B1

**Beschreibung**

Die Erfindung betrifft eine Meßvorrichtung zur Messung von Kräften und Momenten in einer Gelenkanordnung gemäß dem Oberbegriff von Anspruch 1.

Durch die Erfindung soll eine Meßvorrichtung geschaffen werden, die es ermöglicht, Kräfte und Momente in einer Gelenkanordnung zwischen zwei Gelenkwellen unter Belastung durch Drehzahl und/oder Drehmoment direkt zu messen oder dazu korrespondierende Kräftewerte zu messen, die eine Berechnung der gesuchten Kräfte und Momente ermöglichen. Ferner soll durch die Erfindung die Vorrichtung so ausgebildet werden, daß die Kräfte und Momente in Gelenken von Gelenkwellen direkt oder indirekt auch gemessen werden können, während die Gelenkwellen um den Gelenkmittelpunkt in verschiedene Winkelpositionen relativ zueinander verschwenkt werden, oder nachdem sie verschwenkt wurden. Gleichzeitig soll durch die Erfindung vermieden werden, daß außerhalb des Gelenks vorhandene Kräfte das Meßergebnis fälschen. Dies ist unter anderem deshalb schwierig, weil die Kräfte im Gelenk klein sind im Verhältnis zum Drehmoment, das vom Gelenk übertragen wird.

Diese Aufgabe wird gemäß der Erfindung durch die Kombination der Merkmale von Anspruch 1 gelöst.

Die Meßvorrichtung nach der Erfindung bildet einen Prüfstand, auf welchem in Gelenken von Gelenkwellen entstehende Kräfte simuliert und gemessen werden.

Die Meßvorrichtung nach der Erfindung ist durch folgende Merkmale gekennzeichnet:

1.1. eine Meßwelle, die einen ersten Abschnitt einer der Gelenkwellen bildet,

1.2. das eine Ende der Meßwelle ist mit dem Gelenk verbunden,

1.3. das andere Ende der Meßwelle ist über eine drehstarre, winkelig weiche und axial weiche Kupplung mit einem zweiten Abschnitt der einen Gelenkwelle verbunden, wobei diese Kupplung als Quasi-Gelenk wirkt und Bewegungen der Meßwelle zuläßt, die für Kraftmessungen notwendig sind,

1.4. eine Kraftmeßeinrichtung zur Messung von Kräften der Meßwelle enthält ein Meßlager zur Übertragung der Kräfte der Meßwelle mindestens in einer radialen Richtung von der Meßwelle auf mindestens einen auf radiale Kräfte reagierenden Kraftaufnehmer,

1.5. die Meßwelle ist in dem Meßlager geführt und drehbar, dessen Lagergehäuse undrehbar, jedoch in Kraftmeßrichtung bewegbar angeordnet und in Kraftmeßrichtung durch den Kraftaufnehmer an einem Gegendruckelement abgestützt ist.

Die Erfindung hat die Vorteile, daß die Kräfte in Gelenken von Gelenkwellen auf einem Prüfstand simuliert und gemessen werden können. Dies nicht nur im Stillstand, sondern auch bei rotierenden, mit Drehmoment belasteten Gelenkwellen. Dies auch dann, wenn die Gelenkwellen gleichzeitig bezüglich ihrer relativen Winkellage zueinander winkelverstellt werden. Mit der gleichen Vorrichtung können gemäß der Erfindung auch in einer Axialrichtung einer der beiden Gelenkwellen wirkende Kräfte des Gelenks gemessen werden. Die Messungen können entweder direkt in der radialen Kraftwirkungslinie des Gelenkes oder, vorzugsweise an einer axial dazu versetzten Stelle und damit indirekt gemessen werden, in welch letzterem Falle die tatsächlichen radialen Kräfte im Gelenk auf einfache Weise nach dem Hebelgesetz anhand der Meßergebnisse errechnet werden können.

Die Erfindung wird im folgenden mit Bezug auf die Zeichnungen anhand von mehreren Ausführungsformen der Erfindungen als Beispiele beschrieben. In den Zeichnungen zeigen

Fig. 1    eine schematische Draufsicht auf eine Meßvorrichtung nach der Erfindung zur Messung und Berechnung von Kräften und Momenten in Gelenken von Gelenkwellen unter Belastung durch Drehzahl, Drehmoment und Winkelverstellung der Gelenkwellen relativ zueinander,

Fig. 2    eine Seitenansicht einer weiteren Ausführungsform einer Meßvorrichtung nach der Erfindung, die eine Messung und Berechnung von radialen Kräften im Gelenk von Gelenkwellen in radialer und gegenradialer Richtung y rechtwinkelig zur Drehachse der einen Gelenkwelle sowie eine Messung von axialen Kräften im Gelenk in axialer Richtung x der einen Gelenkwelle ermöglicht,

Fig. 3    eine Seite einer Draufsicht auf die Meßvorrichtung von Fig. 2,

Fig. 4    einen Querschnitt längs der Ebene IV in Fig. 2, unmaßstäblich, und

Fig. 5    eine schematische Querschnittsansicht einer erweiterten Ausführungsform der Ausführungsform von Fig. 2, durch deren Erweiterung in einer zusätzlichen radialen und gegen-radialen Richtung z im Gelenk vorhandene Kräfte gemessen werden können, die rechtwinkelig zur erstgenannten Kraftrichtung y und gleichzeitig rechtwinkelig zur Drehachse der einen Gelenkwelle wirken.

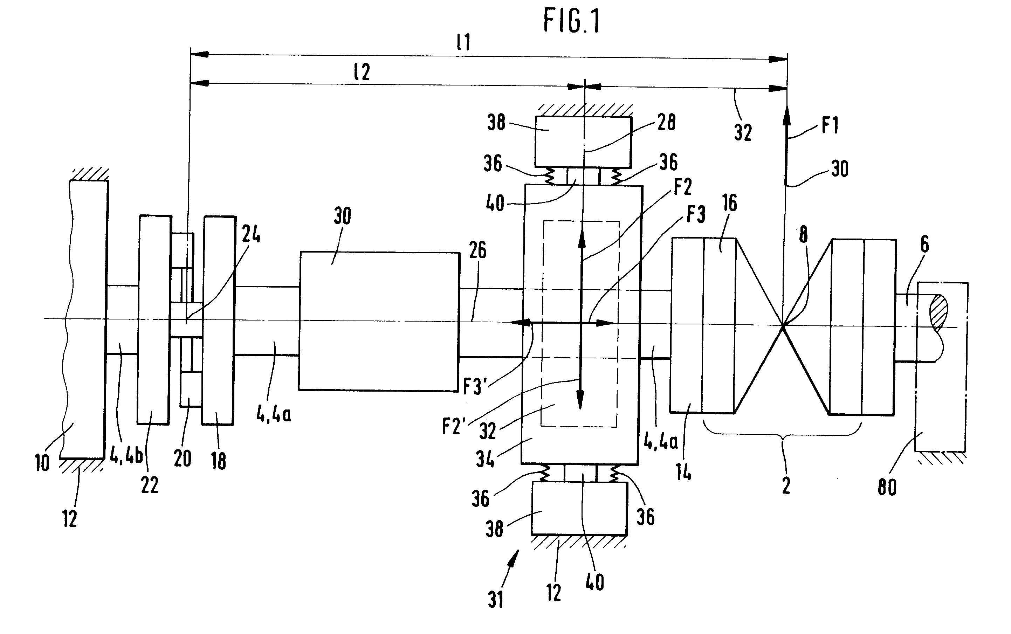

Die in den Zeichnungen dargestellten Vorrichtungen nach der Erfindung dienen zur Messung von Kräften und Momenten in einem Gelenk 2 von Gelenkwellen 4 und 6 unter Belastung durch Drehzahl und Drehmoment und während Schwenkbewegungen der beiden Gelenkwellen 4 und 6 relativ zueinander um den Schwenkmittelpunkt 8 des Gelenkes 2. Die eine Gelenkwelle 4 besteht aus einem ersten Abschnitt 4a, welcher im folgenden als Meßwelle bezeichnet wird, und einem zweiten Abschnitt 4b. Der zweite Abschnitt 4b ist in einem Lager 10 gelagert, das auf einer Grundplatte 12 befestigt ist. Das eine Ende 14 der Meßwelle 4a ist drehstarr, winkelig starr und axial starr mit dem in Fig. 1 links dargestellten Teil 16 des Gelenkes 2 verbunden. Das andere Ende 18 der Meßwelle 4a ist über eine drehstarre, winkelig weiche und axial weiche Kupplung 20 mit dem benachbarten und axial dazu angeordneten Ende 22 des zweiten Abschnittes 4b der einen Gelenkwelle 4 verbunden.

Die Kupplung 20 erlaubt nicht relative Drehbewegungen zwischen der Meßwelle 4a und dem zweiten Abschnitt 4b, erlaubt jedoch winkelige und axiale Bewegungen der Meßwelle 4a relativ zum zweiten Abschnitt 4b. In diesen winkeligen und axialen Bewegungsrichtungen sollte die Kupplung 20 möglichst keine Rückstellkräfte auf die Meßwelle 4a ausüben. Dadurch wirkt die Kupplung 20 als Quasi-Gelenk, und sie ermöglicht die für Kraftmessungen gemäß der Erfindung erforderlichen Bewegungen der Meßwelle 4a in deren axialen und radialen Richtungen. Die in diesen axialen und radialen Richtungen wirkenden Kräfte der Meßwelle 4a korrespondierend zu jeweils in den gleichen axialen und/oder radialen Richtungen wirkenden Kräften im Schwenkmittelpunkt 8 des Gelenkes 2. Die radialen Kräfte im Gelenk 2 können auf einfache Weise nach dem Hebelgesetz

$$l1 \times F1 = l2 \times F2$$

berechnet werden. Die Faktoren haben folgende Bedeutung

F1 = radiale Kraft im Schwenkmittelpunkt 8 des Gelenks 2 in der betreffenden radialen Richtung,

l1 = Abstand des Schwenkmittelpunktes 24 der Meßwelle 4a in der Kupplung 20 vom Schwenkmittelpunkt 8 des Lagers 2,

F2 = radiale Kraft der Meßwelle 4a in einer zu ihrer Drehachse 26 senkrechten Radialebene 28, die von einer Radialebene 30, welche durch den Schwenkmittelpunkt 8 des Lagers 2 geht, einen axialen Abstand 32 hat,

l2 = Abstand des Schwenkmittelpunktes 24 der Meßwelle 4a in der Kupplung 20 von der Radialebene 28, in welcher Radialkräfte F2 der Meßwelle 4a gemessen werden.

Damit die Meßwelle 4a um den Schwenkpunkt 24 der Kupplung 20 schwenken kann, sollte die Kupplung 20 auch radial steif sein und keine radialen Bewegungen des an die Kupplung 20 angeschlossenen Endes 18 der Meßwelle 4 erlauben. Die Meßwelle 4a sollte möglichst nur an ihrem einen Ende 14 zusammen mit dem damit verbundenen Teil 16 des Lagers 2 Radialbewegungen ausführen können, und zwar Radialbewegungen in Form von Schwenkbewegungen um den Schwenkmittelpunkt 24 der Kupplung 20. Diese Schwenkbewegungen sind sehr klein, jedoch erforderlich, weil es heutzutage noch keine Kraftaufnehmer oder Kraftmeßgeräte gibt, die Kräfte eines Prüflings messen können, ohne daß der Prüfling eine Relativbewegung zum Meßgerät ausführt.

In die Meßwelle 4a ist eine Drehmomentmeßeinrichtung 30 integriert, mit welcher das von der Gelenkwelle 4 übertragene Drehmoment gemessen werden kann.

Die Meßwelle 4a ist in einem Lager 32 einer Kraftmeßeinrichtung 31 radial und axial geführt, dessen Lagergehäuse 34 durch elastische und/oder flexible Elemente 36 derart an Trägern 38 aufgehängt ist, daß das Lagergehäuse 34 zusammen mit der Meßwelle 4a relativ zu den Trägern 38 radiale und axiale Bewegungen ausführen kann. Die elastischen und/oder flexiblen Elemente 36 sollten diesen Bewegungen möglichst keine Rückstellkräfte entgegensetzen. Die Träger 38 sind auf der Grundplatte 12 ortsfest angebracht. Zwischen dem Lagergehäuse 34 und den Trägern 38 befinden sich Kraftaufnehmer 40, die radiale Kräfte F2 messen, die in der Meßwelle 4a herrschen und von ihr über das Lager 32 und die Kraftaufnehmer 40 auf die Träger 38 übertragen werden. Die Kraftaufnehmer 40 können so ausgebildet sein, daß sie auch axiale Kräfte der Meßwelle 4 messen, welche von der Meßwelle 4a über das Lager 32 auf die Kraftaufnehmer 40 übertragen werden. In abgewandelter Ausführungsform können zur Messung der axialen Kräfte F3 auch gesonderte Kraftaufnehmer vorgesehen sein. Dabei fungiert die Kupplung 20 als Quasi-Gelenk, und sie läßt alle Bewegungen zu, welche für die Meßwertaufnahme notwendig sind. Beeinflussungen der Meßwerte durch die Kupplung 20, durch die elastischen und/oder flexiblen Elemente 36, also inbesondere Beeinflussungen durch Rückstellmomente dieser Teile, können durch Kalibrierung der Kraftaufnehmer 40 kompensiert werden. Anstelle der in Richtung zum Gelenk 2 gerichteten axialen Kraft F3 kann im Gelenk 2 und damit in der Meßwelle 4a eine entgegengesetzt axial gerichtete Kraft F3′ existieren. Ferner kann anstelle der radialen Kraft F2 eine entgegengesetzt radiale Kraft F2′, oder eine in einer anderen Radialrichtung wirkende Kraft in der Meßwelle 4a vorhanden sein. Zur Messung von alternativ entgegengesetzt wirkenden Kräften F2 und F2′ sind bei der in Fig. 1 dargestellten Ausführungsform zwei diametral gegenüberliegend angeordnete Kraftaufnehmer 40 je zwischen dem Lagergehäuse 34 und den beiden Trägern 38 angeordnet.

Die beiden Gelenkwellen 4 und 6 sind vorzugsweise relativ zueinander um den Schwenkmittelpunkt 8 des Gelenks 2 schwenkbar, damit die Kräfte F2, F2′, F3 und F3′ nicht nur während der Rotation und der Drehmomentübertragung der Gelenkwellen 4 und 6 durch die Druckaufnehmer 40 gemessen werden können, sondern auch bei verschiedenen Winkeln zwischen den Gelenkwellen 4 und 6, wenn diese um den Schwenkmittelpunkt 8 des Gelenkes 2 geschwenkt werden.

Dabei soll diese Messung gemäß der Erfindung vorzugsweise auch während Schwenkbewegungen der Gelenkwellen 4 und 6 möglich sein. Zu diesem Zwecke ist mindestens eine der beiden Gelenkwellen 4 und 6 relativ zur anderen Gelenkwelle so angeordnet werden, daß sie um den Schwenkmittelpunkt 8 geschwenkt werden kann. Zu diesem Zwecke kann die andere Schwenkwelle 6 beispielsweise in einem, nur schematisch dargestellten, ortsfesten Lager 80 gelagert sein, relativ zu welchen die Grundplatte 12 mit der einen Gelenkwelle 4 geschwenkt werden kann. Die Schwenkachse der Grundplatte 12 verläuft dabei in der Radialebene 30 durch den Schwenkmittelpunkt 8 des Gelenks 2. Falls nötig, um die Schwenkachse der Grundplatte 12 in den Schwenkmittelpunkt 8 zu bringen, können zwischen die Meßwelle 4a und das mit ihr verbundene Ende 16 des Gelenks 2 Adapterelemente eingesetzt werden. Ferner ist es für diese Adaption zweckmäßig, die Grundplatte 12 parallel zur Drehachse 26 der Meßwelle 4a verschiebbar auf einer Basis anzuordnen.

Die Erfindung eignet sich auch dafür, in einer Vielzahl von verschiedenen radialen Richtungen wirkende Kräfte des Gelenks 2 mit der gleichen Vorrichtung zu messen.

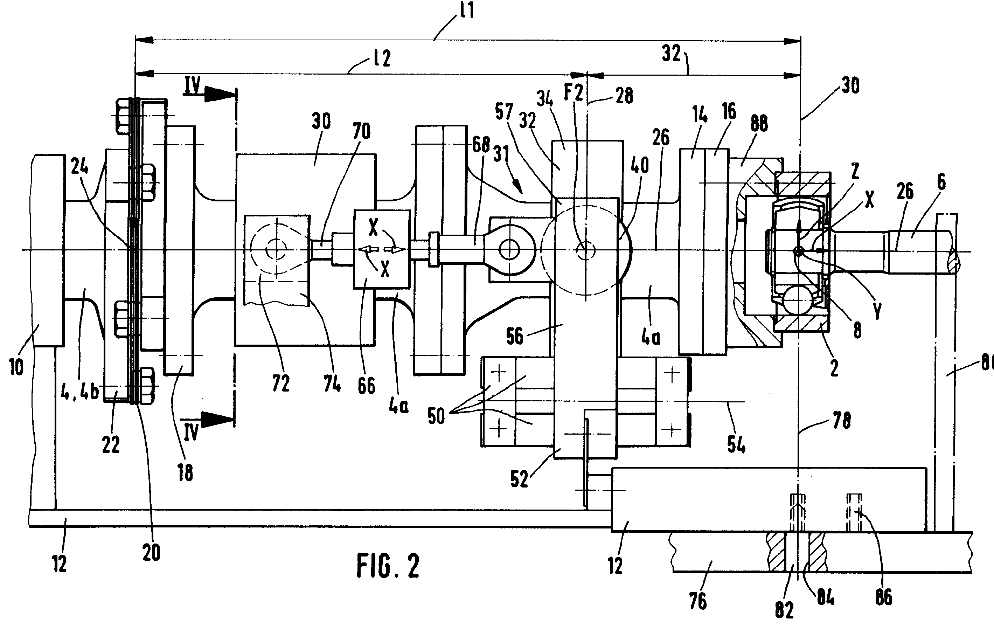

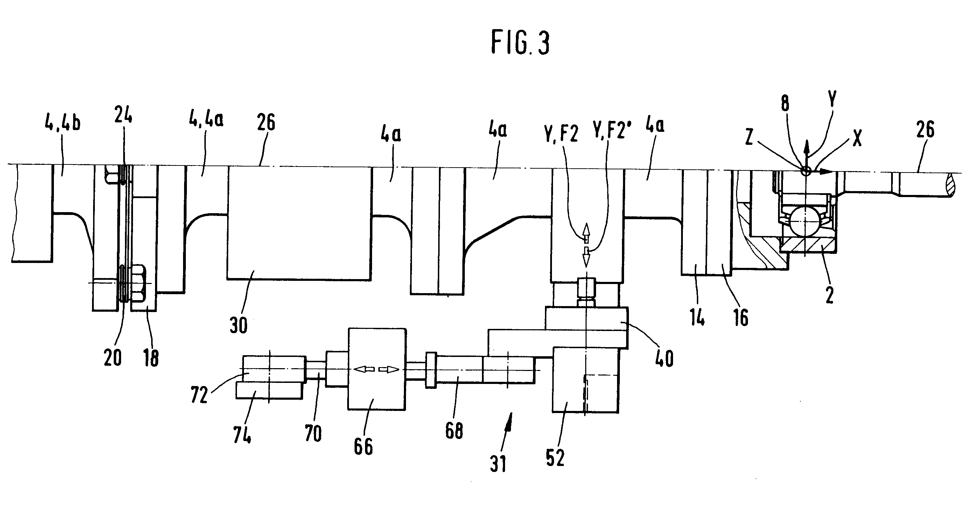

Die Zeichnungen der verschiedenen Ausführungsformen sind untereinander unmaßstäblich gezeichnet. In einem gleichen Maßstab sind jedoch die Fig. 2 und 3 gezeichnet.

Die in den Fig. 2, 3 und 4 dargestellte weitere Ausführungsform einer Meßvorrichtung nach der Erfindung enthält ebenfalls ein Lager 10 auf der Grundplatte 12 zur Lagerung eines Abschnittes 4b der einen Gelenkwelle 4, eine drehstarre, radial starre, winkelig weiche und axial weiche Kupplung 20, auf deren einen Seite das Ende 22 des zweiten Abschnittes 4b und an deren anderen Seite das andere Ende 18 des als Meßwelle dienenden ersten Abschnittes 4a der Gelenkwelle 4 befestigt ist. Die Meßwelle 4a ist um den Schwenkmittelpunkt 24 der Kupplung 20 schwenkbar. Die möglichen Schwenkbewegungen der Meßwelle 4a um den Schwenkmittelpunkt 24 sind sehr klein und hängen von dem Spiel zwischen den Teilen des zu prüfenden Gelenkes 2 ab, welches die eine Gelenkwelle 4 mit der anderen Gelenkwelle 6 drehfest, jedoch winkelveränderlich verbindet. In die Meßwelle 4a ist eine Drehmomentmeßeinrichtung 30 integriert.

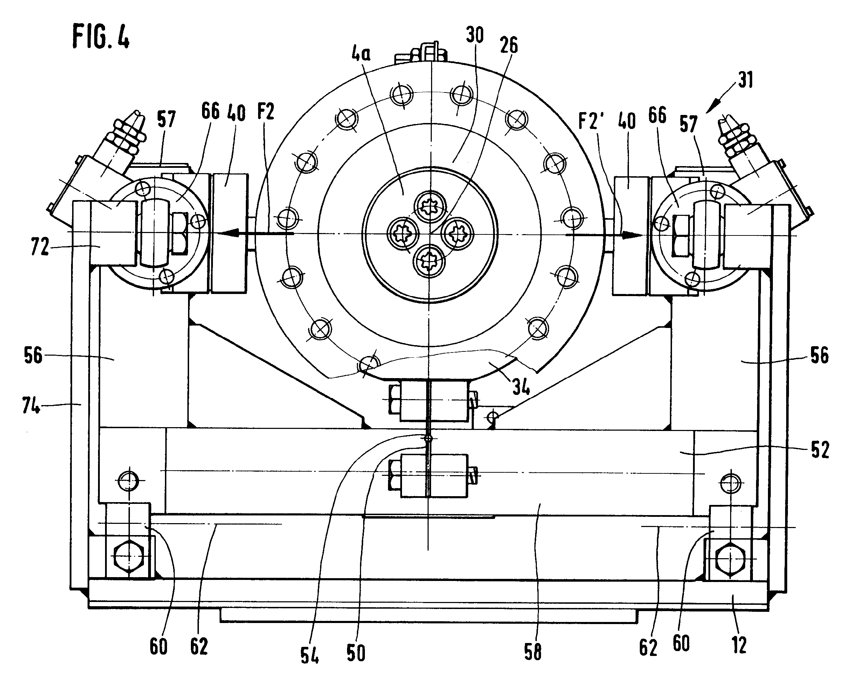

Der als Meßwelle dienende erste Abschnitt 4a der einen Gelenkwelle 4 ist in einem Lager 32 radial und axial geführt, dessen Lagergehäuse 34 ist flexibel aufgehängt, so daß es in Längsrichtung der Drehachse 26 der Meßwelle 4a (x-Richtung und Gegen-x-Richtung) sowie horizontal radial in Richtung der Kraft F2 von Fig. 1 und in Gegen-Radialrichtung entsprechend der Kraft F2′ von Fig. 1 (y-Richtung und Gegen-y-Richtung in Fig. 2) zusammen mit der Meßwelle 4a um deren Schwenkmittelpunkt 24 in der Kupplung 20 schwenkbar ist. Zur Erzielung dieser Schwenkbarkeit ist das Lagergehäuse 34 auf seiner Unterseite über ein Blattfederpaket 50 mit einem U-förmigen Träger 52 mechanisch verbunden. Die Blattfedern des Blattfederpakets 50 sind in einer Vertikalebene angeordnet, in welcher auch die Drehachse 26 der Meßwelle 4a liegt, und haben eine scharnierartige Wirkung mit einer Scharnier-Schwenkachse 54, die parallel zur Drehachse 26 verläuft und um welche das Lagergehäuse 34 relativ zum Träger 52 verschwenkbar ist. Das Blattfederpaket 50 ist axial und radial zu seiner Schwenkachse 54 so starr, daß es axiale Bewegungen des Lagergehäuses 34 auf den Träger 52 überträgt und sich beide axial jeweils zusammen bewegen. Zwischen vertikalen Schenkeln 56 des U-förmigen Trägers 52 und dem Lagergehäuse 34 sind auf diametral voneinander abgewandten Seiten dieses Lagergehäuses 34 je ein Kraftaufnehmer 40 zur Messung von radialen Kräften F2 in y-Richtung und radialen Kräften F2′ in Gegen-y-Richtung angeordnet. Dadurch wirkt der U-förmige Träger 52 als Gegendruckelement für die von der Meßwelle 4a über das Lagergehäuse 34 und die Kraftaufnehmer 40 auf diesen Träger 52 einwirkenden Kräfte. Der Steg 58 des U-förmigen Trägers 52 ist über zwei weitere Blattfedern 60 mit der Grundplatte 12 mechanisch verbunden. Die Blattfedern 60 sind rechtwinkelig zu den Blattfedern des Blattfederpaketes 50 angeordnet, liegen in einer gemeinsamen Ebene, welche die Drehachse 26 der Meßwelle 4a rechtwinkelig kreuzt, und haben in dieser Ebene entsprechend Fig. 4 einen seitlichen Abstand voneinander, so daß sie zusammen zweite scharnierartige Mittel bilden, mit einer zweiten Schwenkachse 62. Durch die scharnierartige Wirkung der Blattfedern 60 kann der U-förmige Träger 52 im wesentlichen längs zur Drehachse 26 der Meßwelle 4a um die zweite Schwenkachse 62 geschwenkt werden und dadurch die für eine Kraftmessung in axialer Richtung x und axialer Gegen-Richtung y erforderlichen Bewegungen ausführen. Die zweite Schwenkachse 62 erstreckt sich unterhalb und rechtwinkelig zur ersten Schwenkachse 54 und damit auch zur Drehachse 26. In einer Horizontalebene, in welcher sich die Drehachse 26 der Meßwelle 4a erstreckt, sind beidseitig mit radialem Abstand von dieser Drehachse 26 je ein Kraftaufnehmer 66 zur Messung von axialen Kräften des Gelenks 2, und damit von Kräften in x-Richtung, angeordnet. Jeder dieser beiden axialen Kraftaufnehmer 66 ist über eine vordere Gelenkstange 68 mit den oberen Enden 57 der Schenkel 56 des U-förmigen Trägers 52 mechanisch verbunden, und über hintere Gelenkstangen 70 mit oberen Enden 72 von Trägern 74 mechanisch verbunden, die mit der Grundplatte 12 starr verbunden sind.

Mit dieser in den Fig. 2, 3 und 4 dargestellten Ausführungsform ist die Messung der Kräfte des Gelenks 2 in zwei Koordinatenrichtungen x und y verwirklicht.

Die Grundplatte 12 ist auf einer Basis 76 axial verschiebbar und um eine Schwenkachse 78 zusammen mit der Meßwelle 4a und dem zweiten Abschnitt 4b der einen Gelenkwelle 4 relativ zur anderen Gelenkwelle 6 schwenkbar. Diese andere Gelenkwelle 6 ist in einem Lager 80 gelagert, das auf der Basis 76 ortsfest an-

EP 0 496 969 B1

geordnet ist. Die Schwenkachse 76 der Grundplatte 12 erstreckt sich in z-Richtung durch den Schwenkmittelpunkt 8 des Gelenks 2. Die Schwenkachse 78 der Grundplatte 12 ist durch einen Lagerzapfen 82 dieser Grundplatte 12 gegeben, der in eine Lagerbohrung 84 der Basis 76 eingreift. Zur axialen Verschiebung der Grundplatte 12 auf der Basis 76 parallel zur Drehachse 26 der Meßwelle 4a kann der Zapfen 82 aus der Grundplatte 12 herausgeschraubt und in eine andere von mehreren Gewindebohrungen 86 der Grundplatte 12 geschraubt werden. Das eine Ende 14 der Meßwelle 26 ist über einen Adapter 88 mit dem Gelenk 2 verbunden. Durch Verwendung von verschieden langen Adaptern 88 kann das Gelenk 2 ebenso wie durch axiales Verstellen der Grundplatte 12 axial so positioniert werden, daß die Schwenkachse 78 der Grundplatte 12 durch den Schwenkmittelpunkt 8 des Gelenks 2 verläuft. Die Radialkräfte F2 und F2' werden von den Kraftaufnehmern 40 im axialen Abstand l2 vom Schwenkpunkt 24 der Kupplung 20 gemessen. Der Schwenkmittelpunkt 24 der Kupplung 20 hat vom Schwenkmittelpunkt 8 des Lagers 2 einen axialen Abstand l1. Die Abstände l1 und l2 können gleich groß sein oder, wie bei den dargestellten Ausführungsformen, unterschiedlich groß sein.

Die Schwenkachse 78 der Grundplatte 12 fluchtet mit der radialen Kraftrichtung z des Gelenks 2. Die z-Richtung verläuft rechtwinkelig zur x-Richtung und auch rechtwinkelig zur y-Richtung. Die y-Richtung verläuft radial zur Drehachse 26 der Meßwelle 4a, während die x-Richtung in Richtung der Drehachse 26 verläuft.

Bei der dargestellten Ausführungsform ist die Messung der Kräfte des Gelenks 2 in den beiden Koordinatenrichtungen x und y verwirklicht. Eine Erweiterung auf drei Koordinatenachsen x, y und z ist durch Einfügen weiterer Kraftaufnehmer problemlos möglich.

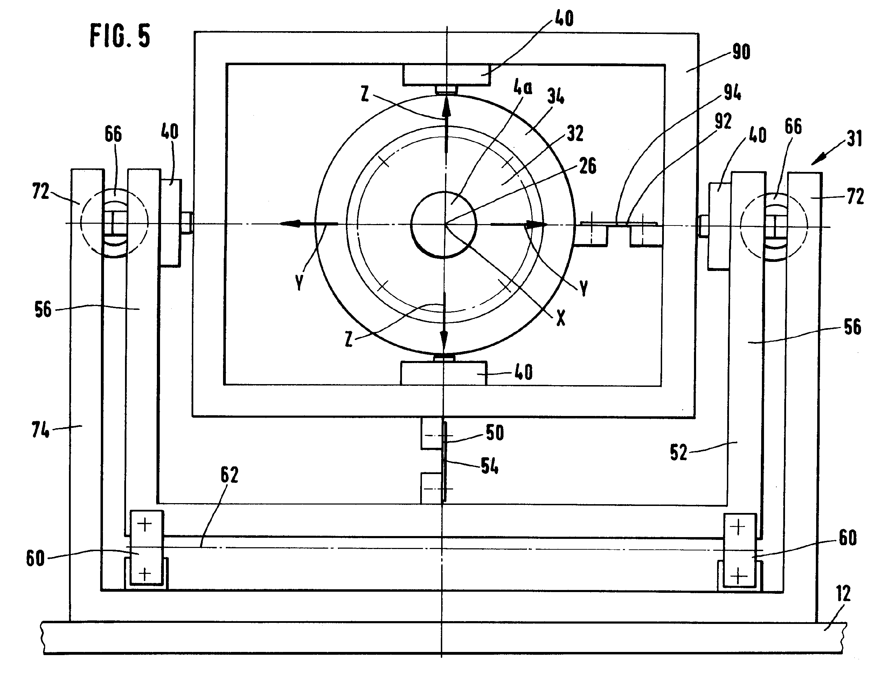

Eine auf drei Koordinatenachsen x, y und z erweiterte Ausführungsform der Erfindung ist in Fig. 5 dargestellt. Ihr Funktionsprinzip ist gleich wie bei den Fig. 2 bis 4, so daß die Beschreibung der Ausführungsform nach Fig. 5 sich auf die Unterschiede beschränken kann. Diese Unterschiede bestehen darin, daß ein zusätzlicher Träger 90 vorgesehen ist, in Form eines viereckigen Rahmens. Dieser Träger 90 ist über das Blattfederpaket 50 um die Scharnier-Schwenkachse 54 schwenkbar mit dem U-förmigen Träger 52 schwenkbar verbunden. Das Lagergehäuse 34 des Lagers 32 ist nicht durch das Blattfederpaket 50 mit dem U-förmigen Träger 52 verbunden, sondern durch ein weiteres Blattfederpaket 92 mit dem dritten, rahmenförmigen Träger 90. Das Lagergehäuse 34 ist innerhalb des rahmenförmigen Trägers 90 angeordnet und um eine durch das Blattfederpaket 92 gebildete dritte Schwenkachse 94 schwenkbar, die parallel zur Drehachse 26 der Meßwelle 4a und damit auch parallel zur ersten Schwenkachse 54 des ersten Blattfederpaketes 50 verläuft. Die Drehachse 26 und die y-Richtungen sowie die dritte Schwenkachse 94 liegen in einer gemeinsamen Ebene. Die Drehachse 26 und die z-Richtungen sowie die erste Schwenkachse 54 liegen in einer weiteren Ebene, welche zur erstgenannten Ebene rechtwinkelig verläuft. Damit kreuzen sich beide Ebenen in der Drehachse 26. In der Ebene, in welcher die z-Richtungen oder z-Achsen des Lagers 32 liegen, sind zwischen dem Lagergehäuse 34 und dem dritten Träger 90 auf voneinander diametral abgewandten Seiten des Lagergehäuses 34 je ein Kraftaufnehmer 40 zur Aufnahme von radialen Kräften der Meßwelle 4a in z-Richtung und entgegengesetzt in z-Richtung angeordnet. Zwischen den Schenkeln 56 des U-förmigen Trägers 52 und dem dritten Träger 90 befinden sich die bereits mit Bezug auf die Fig. 2, 3 und 4 beschriebenen Kraftaufnehmer 40 zur Messung von Kräften in y-Richtung und entgegengesetzt in y-Richtung des Lagers 32.

Damit können mit der in Fig. 5 dargestellten Ausführungsform Kräfte im Meßlager 32 in x-, y- und z-Richtung gemessen werden. Diese Kräfte entsprechen, unter Berücksichtigung der Hebelarmlängen l1 und l2, den Kräften in x-, y- und z-Richtungen im Schwenkmittelpunkt 8 des getesteten Gelenks 2. Die gemessenen Kräfte des Meßlagers 32 oder, mit automatischer Berücksichtigung der Hebelarm-Längen l1 und l2, die korrespondierenden Kräfte des getesteten Gelenks 2, können direkt von den Kraftaufnehmern 40 und 66 oder durch an sie angeschlossene Geräte, z.B. einen Computer, optisch oder akustisch angezeigt, gespeichert oder in anderer Weise benutzt werden.


## Patentansprüche

1. Meßvorrichtung zur Messung und Berechnung von Kräften und Momenten in einer Gelenkanordnung zwischen zwei Gelenkwellen unter Belastung durch Drehzahl und/oder Drehmoment, gekennzeichnet durch folgende Merkmale

   1.1. eine Meßwelle (4a), die einen ersten Abschnitt einer (4) der Gelenkwellen (4,6) bildet,

   1.2. das eine Ende (14) der Meßwelle (4a) ist mit dem Gelenk (2) drehstarr, winkelig starr, radial starr und axial starr verbunden,

   1.3. das andere Ende (18) der Meßwelle (4a) ist über eine drehstarre, radial starre, jedoch winkelig weiche und axial weiche Kupplung (20) mit einem zweiten Abschnitt (4b) der einen Gelenkwelle (4) verbunden, wobei diese Kupplung (20) als Quasi-Gelenk wirkt und Bewegungen der Meßwelle (4a) zuläßt, die für Kraftmessungen notwendig sind,

5

1.4. eine Kraftmeßeinrichtung (31) zur Messung von Kräften der Meßwelle (4a) in mindestens einer Kraftrichtung enthält ein Meßlager (32) zur Übertragung der Kräfte der Meßwelle (4a) auf einen Kraftaufnehmer (40),

1.5. die Meßwelle (4a) ist in dem Meßlager (32) geführt und drehbar, dessen Lagergehäuse (34) undrehbar, jedoch in Kraftmeßrichtung (x, y, z) von den Kräften der Meßwelle (4a) bewegbar angeordnet ist und die in der Meßwelle wirkenden Kräfte (F1, F2', F3) auf dem Weg zum Kraftaufnehmer (40,66) überträgt.

2. Meßvorrichtung nach Anspruch 1,
   **dadurch gekennzeichnet,**
   daß das Meßlager (32) je in axialem Abstand (11, 12) von der Kupplung (20) und von dem Gelenk (2) angeordnet ist, so daß zur Messung von radialen Kräften folgende mathematische Beziehung gegeben ist:
   $$F1 \times l1 \ = \ F2 \times l2,$$
   deren Faktoren folgende Bedeutung haben:
   F1 = radiale Kraft im Meßlager (32) in der betreffenden radialen Kraftmeßrichtung (y, z),
   l1 = Abstand des Schwenkmittelpunktes (20) der Meßwelle (4a) in der Kupplung (20) vom Schwenkmittelpunkt (8) des Gelenks (2), wobei der Schwenkmittelpunkt (24) der Meßwelle (4a) durch die Kupplung (20) gebildet ist,
   F2 = radiale Kraft (F2, F2') der Meßwelle (4a) im Meßlager (32) in der betreffenden Kraftmeßrichtung (y, z),
   l2 = der parallel zur Drehachse (26) der Meßwelle (4a) gegebene Abstand des Schwenkmittelpunktes (24) der Meßwelle (4a) in der Kupplung (20) von einer senkrecht zur Drehachse (26) verlaufenden theoretischen Ebene, in der eine radiale Kraft (F2, F2') von dem betreffenden Kraftaufnehmer (40) in einer radialen Kraftmeßrichtung (y, z) aufgenommen wird.

3. Meßvorrichtung nach Anspruch 1 oder 2,
   **dadurch gekennzeichnet,**
   daß für jede radiale Kraftmeßrichtung (y, z und jeweils radial entgegengesetzt dazu) ein radial angeordneter Kraftaufnehmer (40) und ein radial wirkendes Gegendruckelement (38;52;90) vorgesehen ist, daß das Lagergehäuse (34) des Meßlagers (32) als ein erstes Kettenglied und die radialen Gegendruckelemente (38;52;90) als folgende Kettenglieder je über Gelenkmittel (50,60) miteinander verbunden sind, die Bewegungen der Gegendruckelemente relativ zueinander um Schwenkachsen (54;94) ermöglichen, die zueinander und zur Drehachse (26) der Meßwelle (4a) je parallel sich erstrecken um die Drehachse (26) versetzt zueinander angeordnet sind.

4. Meßvorrichtung nach einem der Ansprüche 1 bis 3,
   **dadurch gekennzeichnet,**
   daß die Kräfte (F2, F2') in allen radialen Kraftmeßrichtungen (y, z, und radial entgegengesetzt dazu) in einer gemeinsamen theoretischen Ebene gemessen werden, die rechtwinkelig zur Drehachse (26) der Meßwelle (4a) verläuft.

5. Meßvorrichtung nach einem der Ansprüche 1 bis 4,
   **dadurch gekennzeichnet,**
   daß mindestens ein axialer Kraftaufnehmer (66) zur Messung von axialen Kräften der Meßwelle (4a) achsparallel neben der Meßwelle angeordnet ist, und daß die axialen Kräfte (F3, F3') von der Meßwelle (4a) über das Meßlager (32) auf den axialen Kraftaufnehmer (66) übertragen werden.

6. Meßvorrichtung nach Anspruch 5,
   **dadurch gekennzeichnet,**
   daß das letzte radiale Gegendruckelement (52) über Gelenkmittel (60) mit einem axial wirkenden Gegendruckelement (74) verbunden ist und relativ zu diesem um eine Schwenkachse (62) schwenkbar ist, die rechtwinkelig zur Drehachse (26) der Meßwelle (4a) und damit auch rechtwinkelig zu den Schwenkachsen (54;94) für die radialen Kraftaufnehmer (40) sich erstreckt, jedoch zu diesen radial versetzt ist.

7. Meßvorrichtung nach Anspruch 5 oder 6,
   **dadurch gekennzeichnet,**
   daß die Gelenkmittel (50,60) zur Verbindung der Gegendruckelemente (90,52,74) und die Gelenkmittel (92) zur schwenkbaren Verbindung des ersten Gegendruckelements (90) mit dem Lagergehäuse (34) so ausgebildet sind, daß diejenigen der Gelenkmittel (50,90), welche Bewegungen des Lagergehäuses (34)

EP 0 496 969 B1

in radialen Meßrichtungen (y, z) zulassen, Bewegungen in anderen Richtungen nicht zulassen, sondern in diesen anderen Richtungen derart starr sind, daß sie axiale Bewegungen des Lagergehäuses (34) in axialer Richtung auf das jeweilige nachfolgende Gegendruckelement bis zu den axialen Kraftaufnehmern (66) und deren axialen Gegendruckelement (74) übertragen.

**8.** Meßvorrichtung nach einem der Ansprüche 1 bis 7,
**dadurch gekennzeichnet,**
daß in die Meßwelle (4a) eine Drehmomentmeßeinrichtung (30) zur Messung von Drehmomenten integriert ist, die von der Meßwelle übertragen werden.

**9.** Meßvorrichtung nach einem der Ansprüche 1 bis 8,
**dadurch gekennzeichnet,**
daß die beiden Gelenkwellen (4,6) um den Schwenkmittelpunkt (8) des Gelenkes (2) relativ zueinander winkelverstellbar (um Schwenkachse 78) angeordnet sind.


## Claims

**1.** Measuring apparatus for the measurement and calculation of forces and moments in a joint arrangement between two drive shafts under load through rotation and/or torque, characterised by the following features:
1.1 a measuring shaft (4a) which forms a first section of one (4) of the drive shafts (4, 6),
1.2 the one end (14) of the measuring shaft (4a) is rotationally, angularly, radially and axially rigidly connected to the joint (2),
1.3 the other end (18) of the measuring shaft (4a) is connected to a second section (4b) of the one drive shaft (4) by means of a rotationally rigid, radially rigid, but angularly and axially yieldable coupling (20), whereby this coupling (20) acts as a quasi-joint and permits movements of the measuring shaft (4a) which are necessary for force measurements,
1.4 a force measuring apparatus (31) for the measurement of forces of the measuring shaft (4a) in at least one force direction includes a measuring bearing (32) for the transmission of the forces of the measuring shaft (4a) to a force detector (40),
1.5 the measuring shaft (4a) is guided and rotatable in the measuring bearing (32) whose bearing housing (34) is arranged to be non-rotatable but movable in the force measurement directions (x, y, z) by the forces of the measuring shaft (4a), with the bearing housing transferring the forces (F1, F2′, F3) acting in the measuring shaft on the way to the force detector (40, 66).

**2.** Measuring apparatus according to claim 1, characterised in that the measuring bearing (32) is arranged at respective axial distances (l1, l2) from the coupling (20) and from the joint (2) so that for the measurement of radial forces the following mathematical equation applies:

$$F1 \times l1 = F2 \times l2$$

wherein the terms are as follows:
F1 = radial force in the measuring bearing (32) in the relevant radial force measuring direction (y,z),
l1 = distance of pivot mid-point (24) of the measuring shaft (4a) in the coupling (20) from the pivot mid-point (8) of the joint (2), wherein the pivot mid-point (24) of the measuring shaft (4a) is defined by the coupling (20),
F2 = radial force (F2, F2′) of the measuring shaft (4a) in the measuring bearing (32) in the relevant force measuring direction (y, z),
l2 = the distance, taken parallel to the axis of rotation (26) of the measuring shaft (4a), of the pivot mid-point (24) of the measuring shaft (4a) in the coupling (20) from a theoretical plane extending perpendicular to the axis of rotation (26) in which a radial force (F2, F2′) is received by the relevant force detector (40) in a radial force measuring direction (y, z).

**3.** Measuring apparatus according to claim 1 or 2, characterised in that for each radial force measuring direction (y,z and reciprocal radial directions) there is provided a radially arranged force detector (40) and a radially acting counterpressure member (38; 52; 90), in that the bearing housing (34) of the measuring bearing (32) is connected as a first chain member and the radial counterpressure member (38; 52; 90) is connected as a following chain member with the chain members connected by joint means (50, 60) which makes possible movements of the counterpressure members relative to one another about pivot axes (54;

94) which extend parallel to each other and parallel to the axis of the rotation (26) of the measuring shaft (4a) and are arranged offset relative to one another about the axis of rotation (26).

4. Measuring apparatus according to one of claims 1 to 3, characterised in that the forces (F2, F2′) in all radial force measuring directions (y, z and reciprocal radial directions) are measured in a common theoretical plane which extends perpendicular to the axis of rotation (26) of the measuring shaft (4a).

5. Measuring apparatus according to one of claims 1 to 4, characterised in that at least one axial force detector (66) for the measurement of axial forces of the measuring shaft (4a) is arranged axially parallel to and adjacent to the measuring shaft, and the axial forces (F3, F3′) are transferred from the measuring shaft (4a) by means of the measuring bearing (32) to the axial force detector (66).

6. Measuring apparatus according to claim 5, characterised in that the last radial counterpressure member (52) is connected by joint means (60) with an axially acting counterpressure member (74) and is pivotable relative to this about a pivot axis (62) which extends perpendicular to the axis of rotation (26) of the measuring shaft (4a) and consequently also perpendicular to the pivot axes (54; 94) for the radial force detector (40), but is radially offset relative to this.

7. Measuring apparatus according to claim 5 or 6, characterised in that the joint means (50, 60) for the connection of the counterpressure members (90, 52, 74) and the joint means (92) for the pivotable connection of the first counterpressure member (90) with the bearing housing (34) is so arranged that each of the joint means (50, 90) which permits movements of the bearing housing (34) in radial measuring directions (y, z) does not permit movements in other directions, but in these other directions are rigid such that they transfer axial movements of the bearing housing (34) in the axial direction to the respective succeeding counter pressure member as far as to the axial force detectors (66) and their axial counterpressure members (74).

8. Measuring apparatus according to one of claims 1 to 7, characterised in that a torque measuring apparatus (30) is integrated into the measuring shaft (4a) for the measurement of torques which are transferred by the measuring shaft.

9. Measuring apparatus according to one of claims 1 to 8, characterised in that the two drive shafts (4, 6) are arranged to be angularly displaceable relative to one another (about pivot axis 78) about the pivot mid-point (8) of the joint (2).

**Revendications**

1. Dispositif de mesure pour mesurer et calculer des forces et des couples dans un joint d'articulation entre deux arbres articulés, avec contrainte par une vitesse angulaire et/ou par un couple de rotation, caractérisé par les particularités suivantes :
   1.1. un arbre mesureur (4a) forme un premier segment de l'un (4) des arbres articulés (4, 6),
   1.2. l'une (14) des extrémités de l'arbre mesureur (4a) est verrouillée en rotation avec l'articulation (2), à laquelle elle est reliée avec rigidités angulaire, radiale et axiale,
   1.3. l'autre extrémité (18) de l'arbre mesureur (4a) est reliée, par l'intermédiaire d'un accouplement (20) rigide en rotation, rigide radialement, mais toutefois souple angulairement et souple axialement, à un second segment (4b) de l'un (4) des arbres articulés, cet accouplement (20) agissant comme une quasi-articulation, et autorisant des mouvements de l'arbre mesureur (4a) qui sont nécessaires pour des mesurages de forces,
   1.4. un système (31) mesureur de forces, conçu pour mesurer des forces de l'arbre mesureur (4a) dans au moins une direction de force, renferme un palier mesureur (32) pour la répercussion des forces de l'arbre mesureur (4a) sur un capteur de forces (40),
   1.5. l'arbre mesureur (4a) est guidé et peut tourner dans le palier mesureur (32) dont le carter (34) ne peut pas tourner, mais est néanmoins agencé avec mobilité dans une direction (x, y, z) de mesurage de forces, sous l'effet des forces de l'arbre mesureur (4a), et répercute, sur le trajet vers le capteur de forces (40, 66), les forces (F1, F2′, F3) agissant dans l'arbre mesureur.

2. Dispositif de mesure selon la revendication 1,
   caractérisé par le fait

que le palier mesureur (32) est situé à distance axiale respective (11, 12) de l'accouplement (20) et de l'articulation (2), ce qui donne, pour le mesurage de forces radiales, la relation mathématique suivante :

$$F1 \times 11 = F2 \times 12,$$

dont les facteurs ont la signification suivante :

F1 = force radiale dans le palier mesureur (32), dans la direction radiale considérée (y, z) de mesurage des forces,

11 = distance comprise entre le point central de pivotement (24) de l'arbre mesureur (4a) dans l'accouplement (20), et le point central de pivotement (8) de l'articulation (2), le point central de pivotement (24) de l'arbre mesureur (4a) étant formé par l'accouplement (20),

F2 = force radiale (F2, F2') de l'arbre mesureur (4a) dans le palier mesureur (32), dans la direction considérée (y, z) de mesurage des forces,

12 = distance donnée, parallèlement à l'axe de rotation (26) de l'arbre mesureur (4a), comprise entre le point central de pivotement (24) de l'arbre mesureur (4a) dans l'accouplement (20), et un plan théorique qui s'étend perpendiculairement à l'axe de rotation (26) et dans lequel une force radiale (F2, F2') est captée, par le capteur de forces (40) considéré, dans une direction radiale (y, z) de mesurage des forces.

3. Dispositif de mesure selon la revendication 1 ou 2,
caractérisé par le fait
qu'un capteur de forces (40) disposé radialement et un élément de contre-pression (38 ; 52 ; 90), agissant radialement, sont prévus pour chaque direction radiale de mesurage des forces (y, z et respectivement à l'opposé dans le sens radial) ; et par le fait que le carter (34) du palier mesureur (32), matérialisant un premier maillon, et les éléments radiaux de contre-pression (38 ; 52 ; 90), matérialisant des maillons successifs, sont à chaque fois reliés mutuellement par l'intermédiaire de moyens d'articulation (50, 60) permettant aux éléments de contre-pression d'accomplir, les uns par rapport aux autres, des mouvements autour d'axes de pivotement (54 ; 94) qui s'étendent parallèlement les uns aux autres et à l'axe de rotation (26) de l'arbre mesureur (4a), et sont agencés avec décalage réciproque autour de l'axe de rotation (26).

4. Dispositif de mesure selon l'une des revendications 1 à 3,
caractérisé par le fait
que les forces (F2, F2'), agissant dans toutes les directions radiales de mesurage des forces (y, z et à l'opposé dans le sens radial), sont mesurées dans un plan théorique commun s'étendant à angle droit par rapport à l'axe de rotation (26) de l'arbre mesureur (4a).

5. Dispositif de mesure selon l'une des revendications 1 à 4,
caractérisé par le fait
qu'au moins un capteur axial de forces (66), conçu pour mesurer des forces axiales de l'arbre mesureur (4a), est placé avec parallélisme axial à côté de l'arbre mesureur ; et par le fait que les forces axiales (F3, F3') sont répercutées de l'arbre mesureur (4a) au capteur axial de forces (66), par l'intermédiaire du palier mesureur (32).

6. Dispositif de mesure selon la revendication 5,
caractérisé par le fait
que le dernier élément radial de contre-pression (52) est relié, par l'intermédiaire de moyens d'articulation (60), à un élément de contre-pression (74) agissant dans le sens axial, et peut pivoter, par rapport à ce dernier, autour d'un axe de pivotement (62) qui s'étend à angle droit par rapport à l'axe de rotation (26) de l'arbre mesureur (4a), et donc également à angle droit par rapport aux axes de pivotement (54 ; 94) destinés aux capteurs radiaux de forces (40), mais est toutefois décalé de ces derniers dans le sens radial.

7. Dispositif de mesure selon la revendication 5 ou 6,
caractérisé par le fait
que les moyens d'articulation (50, 60) destinés à relier les éléments de contre-pression (90, 52, 74), et les moyens d'articulation (92) destinés à la liaison pivotante du premier élément de contre-pression (90) avec le carter (34) du palier, sont réalisés de telle sorte que ceux (50, 90), parmi les moyens d'articulation, qui autorisent des mouvements du carter (34) du palier dans des directions radiales de mesurage (y, z), n'autorisent pas des mouvements dans d'autres directions, mais présentent en revanche, dans ces autres directions, une rigidité telle qu'ils répercutent des mouvements axiaux du carter (34) du palier, dans la direction axiale, sur l'élément de contre-pression successif considéré, jusqu'aux capteurs axiaux de forces (66) et à l'élément axial de contre-pression (74) de ces derniers.

8. Dispositif de mesure selon l'une des revendications 1 à 7,
caractérisé par le fait
qu'un système (30) de mesurage de couples de rotation est intégré dans l'arbre mesureur (4a), en vue de mesurer des couples de rotation répercutés par l'arbre mesureur.

9. Dispositif de mesure selon l'une des revendications 1 à 8,
caractérisé par le fait
que les deux arbres articulés (4, 6) sont agencés, autour du point central de pivotement (8) de l'articulation (2), avec faculté de réglage angulaire mutuel (autour d'un axe de pivotement 78).

FIG.1

FIG. 2

# FIG.3

EP 0 496 969 B1

FIG.4

EP 0 496 969 B1

FIG. 5

EP 0 496 969 B1